(19) **Europäisches Patentamt**
European Patent Office
Office européen des brevets

(11) **EP 1 595 420 B1**

(12) **EUROPÄISCHE PATENTSCHRIFT**

(45) Veröffentlichungstag und Bekanntmachung des Hinweises auf die Patenterteilung:
**14.01.2009 Patentblatt 2009/03**

(51) Int Cl.:
*H04W 12/04* (2009.01)    *H04L 12/56* (2006.01)

(21) Anmeldenummer: **04712042.3**

(22) Anmeldetag: **18.02.2004**

(86) Internationale Anmeldenummer:
**PCT/EP2004/001549**

(87) Internationale Veröffentlichungsnummer:
**WO 2004/075584 (02.09.2004 Gazette 2004/36)**

(54) **VERFAHREN ZUM BILDEN UND VERTEILEN KRYPTOGRAPHISCHER SCHLÜSSEL IN EINEM MOBILFUNKSYSTEM UND ENTSPRECHENDES MOBILFUNKSYSTEM**

METHOD FOR CREATING AND DISTRIBUTING CRYPTOGRAPHIC KEYS IN A MOBILE RADIO SYSTEM, AND CORRESPONDING MOBILE RADIO SYSTEM

PROCEDE DE CREATION ET DE REPARTITION DE CLES CRYPTOGRAPHIQUES DANS UN SYSTEME DE TELEPHONIE MOBILE ET SYSTEME DE TELEPHONIE MOBILE CORRESPONDANTE

(84) Benannte Vertragsstaaten:
**AT BE BG CH CY CZ DE DK EE ES FI FR GB GR HU IE IT LI LU MC NL PT RO SE SI SK TR**

(30) Priorität: **20.02.2003 DE 10307403**

(43) Veröffentlichungstag der Anmeldung:
**16.11.2005 Patentblatt 2005/46**

(73) Patentinhaber: **SIEMENS AKTIENGESELLSCHAFT**
**80333 München (DE)**

(72) Erfinder:
• **HORN, Günther**
**81541 München (DE)**
• **KRÖSELBERG, Dirk**
**80469 München (DE)**

(56) Entgegenhaltungen:
**EP-A- 1 156 694**        **EP-A- 1 209 934**
**EP-A- 1 213 943**        **EP-A- 1 241 826**
**EP-A- 1 248 483**        **WO-A-99/00958**
**US-A- 6 128 391**

• **3GPP: "3GPP; Technical Specification Group Services and System Aspects;3G Security; Specification of the MILENAGE Algorithm Set; An example algorithm set for the 3GPP authentication and key generation fuctions f1, f1*, f2, f3, f4, f5 and f5*; Document 1: General (Release 5)" 3GPP TS 35.205 V5.0.0, Juni 2002 (2002-06), Seite COMPLETE, XP002286960**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Bilden und Verteilen kryptographischer Schlüssel in einem Mobilfunksystem sowie ein Mobilfunksystem.

Im Rahmen des Universal Mobile Telecommunications Systems (UMTS) werden Internet-basierte Multimediadienste entwickelt, um die Einsetzbarkeit des UMTS-Mobilfunksystems zu verbessern und zusätzlichen Anwendungsgebiete zu eröffnen.

Als eine Plattform für Internet-basierte Multimediadienste für ein Mobilfunksystem wurde in dem 3GPP (3rd Generation Partnership Project) ein so genanntes IP-based Multimedia Subsystem (IMS) standardisiert, welches in der UMTS Release 5 - Architektur beschrieben ist.

Wenn ein Mobilfunkendgerät eines Mobilfunk-Teilnehmers sich in einem Kommunikationsnetz in einem Mobilfunksystem mit IMS anmeldet, um Internet-basierte Multimedia-Dienste in Anspruch zu nehmen, so wird für das Mobilfunkendgerät eine Authentifikation durchgeführt, gemäß dem in [1] beschriebenen 3GPP-'Standard gemäß dem IMS-Authentication and Key-Agreement-Protocol (IMS-AKA-Protokoll).

Gemäß dem IMS-AKA-Protokoll authentifizieren das Mobilfunkendgerät und das Kommunikationsnetz, in dessen Bereich sich das Mobilfunkendgerät aktuell befindet, sich gegenseitig und es werden zwei kryptographische Schlüssel generiert, der so genannte Integritätsschlüssel und der so genannte Übertragungsschlüssel. Der Integritätsschlüssel wird gemäß UMTS Release 5 zum Schutz der IMS-Signalisierung zwischen dem Mobilfunkendgerät und einem Computer des besuchten Kommunikationsnetzes (Visited Network) eingesetzt. Der Computer des besuchten Kommunikationsnetzes ist als Call State Control Function-Computer (CSCF-Computer) eingerichtet und wird als Proxy-CSCF-Computer (P-CSCF-Computer) bezeichnet. Der Übertragungsschlüssel ist zur Verschlüsselung vorgesehen, d.h. zum Schutz der Vertraulichkeit der ausgetauschten Daten.

Zusätzlich zu dem Schutz der reinen IMS-Signalisierungsnachrichten unter Verwendung des Integritätsschlüssels kann es vorgesehen sein, dass zwischen einem Applikationsserver-Computer und dem Mobilfunkendgerät zusätzliche elektronische Nachrichten in vertraulicher Weise ausgetauscht werden sollen im Rahmen der Bereitstellung IPbasierter Dienste.

Ein Applikationsserver-Computer auf der Netzseite ist im Rahmen dieser Beschreibung insbesondere ein Computer, der Dienste gemäß einem auf der Anwendungsschicht (OSI-Schicht 7) vorgesehene, vorzugsweise multimediale, Dienste anbietet und gemäß einem Schicht-7-Protokoll, d.h. einem Anwendungsschicht-Protokoll kommuniziert. Beispielsweise kann der Applikationsserver-Computer als ein HTTP-Server-Computer (Hypertext Transfer Protocol) ausgestattet sein und mit dem Mobilfunkendgerät gemäß dem HTTP-Protokoll kommunizieren.

Über die Grundfunktionalität des IMS hinaus werden Applikationsserver-Computer beispielsweise zur Administration netzseitiger Benutzereinstellungen und zur Speicherung und Verwaltung von Profildaten über die Mobilfunksystem-Teilnehmer verwendet.

Beispiele solcher Anwendungen zwischen mobilen Benutzern (insbesondere denen eines IMS-Mobilfunksystems) und Applikationsserver-Computern im Kommunikationsnetz, die das HTTP-Protokoll verwenden, sind:

- Zugriffslisten auf Presence-Servern, mit denen es möglich ist, Positionsinformation über die aktuelle Position eines Mobilfunkendgerätes innerhalb des Mobilfunksystems (beispielsweise GPS-Daten) zu nutzen,
- Buddy-Lists von Chat-Applikätionen, d.h. Listen von für eine Chat-Applikation zugelassenen Teilnehmern,
- Gruppenmanagement-Dienste sowie
- Einstellungen für elektronische Multimedia-Konferenzen.

Als ein weiteres Beispiel für eine solche Anwendung ist zu nennen, dass Multicast-Verbindungen zwischen einem Mobilfunkendgerät und zwischen einem Multicast-Service-Center aufgebaut werden unter Verwendung des IMS-Systems.

Um die zwischen dem Mobilfunkendgerät und dem Applikationsserver-Computer verwendeten Protokolle kryptographisch zu sichern, müssen deren Nachrichten geschützt sein, beispielsweise hinsichtlich Authentifikation, Datenintegrität und/oder Daten-Vertraulichkeit.

Abhängig von dem konkreten Einsatz-Szenario und dem verwendeten Anwendungsschicht-Protokoll werden unterschiedliche Sicherheitsprotokolle zur Sicherung des Anwendungsschicht-Protokolls verwendet, beispielsweise

- für dass HTTP das Sicherheitsprotokoll HTTP-Digest, das TLS-Protokoll (Transport Layer Security Protocol) oder WTLS (Wireless Transport Layer Security Protocol) sowie
- für die Schlüsselverteilung für Multicast-Kommunikationsverbindungen MIKEY (Multimedia Internet KEYing) .

Bei allen kryptographischen Anwendungsschicht-Protokollen ist es erforderlich, dass die beteiligten Kommunikationspartner, insbesondere das Mobilfunkendgerät und der Applikationsserver-Computer, d.h. der Applikationsserver-Computer im Kommunikationsnetz, über geheimes Schlüsselmaterial, d.h. über geheime Schlüssel, verfügen, welches bereits zu Beginn des Sendens der ersten gesicherten elektronischen Nachricht zur Verfügung steht.

Im Fall des IMS basiert die Schlüsselinfrastruktur auf symmetrischen Schlüsseln, die zur Authentifikation der IMS-Benutzer im Rahmen der IMS-Registrierung, d.h. im Rahmen des in [1] beschriebenen Authentifizierungs- und Schlüsselaustausch-Protokolls verwendet werden.

Wie in [1] beschrieben, registriert sich ein Mobilfunkendgerät im IMS für eine IMS-Kommunikationssitzung bei seinem Heimat-Kommunikationsnetz (Home Network) bei dem dafür vorgesehenen Computer, der auch als S-CSCF-Computer (Serving Call State Control Function-Computer) bezeichnet wird.

Die Kommunikation erfolgt unter Verwendung eines lokalen Proxy-Computers, dem oben beschriebenen P-CSCF-Computer, in dem besuchten Kommunikationsnetz, welcher den ersten IMS-Kontaktpunkt für das Mobilfunkendgerät und damit für den mobilen Benutzer darstellt.

Die Authentifikation gemäß [1] erfolgt zwischen dem Mobilfunkendgerät und dem S-CSCF-Computer unter Beteiligung eines so genannten HSS-Computers (Home Subscriber Server-Computer). Im Rahmen der Authentifikation werden in dem Mobilfunkendgerät und in dem HSS-Computer der Integritätsschlüssel und der Übertragungsschlüssel erzeugt und an den S-CSCF-Computer in kryptographisch gesicherter Weise übertragen.

Von dem S-CSCF-Computer wird der Integritätsschlüssel kryptographisch gesichert zu dem P-CSCF-Computer übertragen. Der Integritätsschutz und die Authentizität der nachfolgenden IMS-bezogenen Signalisierungsnachrichten wird lokal zwischen dem Mobilfunkendgerät und dem P-CSCF-Computer gewährleistet und basiert auf dem Integritätsschlüssel. Gemäß UMTS Release 5 wird der Übertragungsschlüssel derzeit nicht verwendet, es ist jedoch geplant, in zukünftigen Versionen des UMTS-Standards (Release 6 und nachfolgende Standards) den Übertragungsschlüssel für den zusätzlichen Schutz der Vertraulichkeit übertragener Daten einzusetzen.

Ein Problem ergibt sich, wenn man den Übertragungsschlüssel und den Integritätsschlüssel, die als Sitzungsschlüssel aus einer IMS-AKA-Authentifizierung und Schlüsselerzeugung entstehen, auch für die Sicherung anderer Applikationen als zur IMS-Signalisierung verwendet.

Das Mobilfunkendgerät und das Heimat-Kommunikationsnetz, anders ausgedrückt der Benutzer und der Heimat-Kommunikationsnetzbetreiber werden als gegenseitig vertrauenswürdig angesehen.

Allerdings erhält das besuchte Kommunikationsnetz (im Roaming-Fall; im Non-Roaming-Fall entspricht dies dem Heimat-Kommunikationsnetz) den Integritätsschlüssel und den Übertragungsschlüssel. Würde ein Applikationsserver-Computer ebenfalls den Integritätsschlüssel und den Übertragungsschlüssel erhalten, so wäre der Applikationsserver-Computer theoretisch in der Lage, die Sicherheit der IMS-Signalisierung zwischen dem Mobilfunkendgerät und dem besuchten Kommunikationsnetz zu kompromittieren. Umgekehrt wäre das besuchte Kommunikationsnetz, d.h. ein Computer des besuchten Kommunikationsnetzes in der Lage, die Sicherheit der Kommunikation zwischen dem Mobilfunkendgerät und dem Applikationsserver-Computer zu kompromittieren, wenn diese direkt auf dem Integritätsschlüssel oder dem Übertragungsschlüssel beruhen würde.

Auch für den Fall, dass ein Mobilfunkendgerät mit mehreren Applikationsserver-Computern gleichzeitig kommunizieren möchte, ist es wünschenswert, oftmals sogar erforderlich, dass es nicht möglich ist, aus dem kryptographischen Schlüssel, dem ein jeweiliger Applikationsserver-Computer erhält, Rückschlüsse auf den kryptographischen Schlüssel, den ein anderer Applikationsserver-Computer erhält, zu ziehen.

Ein möglicher Ansatz, um das oben beschriebenen Problem zu lösen, ist der, dass sowohl in dem Heimat-Kommunikationsnetz als auch in dem Mobilfunkendgerät des Benutzers eine Ableitung eines neuen kryptographischen Schlüssels aus dem Integritätsschlüssel und/oder dem Übertragungsschlüssel stattfindet. Ein Applikationsserver-Computer erhält den abgeleiteten kryptographischen Schlüssel, kennt also weder den Integritätsschlüssel noch den Übertragungsschlüssel, vorausgesetzt, dass die zur Schlüsselableitung verwendete kryptographische Funktion keine sinnvollen Rückschlüsse auf den Integritätsschlüssel und/oder den Übertragungsschlüssel für den Applikationsserver-Computer zulässt.

Das Problem, das sich bei diesem Ansatz ergibt, ist, dass man eine Schlüsselableitungsfunktion benötigt, die von dem Computer des besuchten Kommunikationsnetzes nicht nachzuvollziehen ist. Ein so genannter Keyed-Hash, der als Eingabeparameter beispielsweise den Integritätsschlüssel oder den Übertragungsschlüssel und als Zufallswert den im Rahmen der gemäß [1] erfolgten Authentifikation erzeugten Zufalls-Parameter verwendet, kann von dem Computer in dem besuchten Kommunikationsnetz ebenso berechnet werden.

Ein neuer Zufallsparameter, der zwischen dem Mobilfunkendgerät des Benutzers und dem Heimat-Kommunikationsnetz zum Zwecke der Schlüsselableitung vereinbart würde, wäre nur durch eine Änderung an bestehenden Kommunikations- bzw. Sicherheitsprotokollen, d.h. durch eine Änderung beispielsweise am IMS-AKA-Protokoll oder in der Kommunikation zwischen dem S-CSCF-Computer und dem HSS-Computer, zu erreichen.

Eine solche Änderung soll aber vermieden werden, da eine Modifikation existierender Kommunikationsstandards oder Sicherheitsstandards nicht auf einfache Weise durchgeführt werden kann und somit sehr kostenintensiv ist.

Eine Übersicht über die in dem UMTS-Standard Relesase 5 vorgesehenen Sicherheitsmechanismen ist in [2] zu finden.

Die im Rahmen des IMS-AKA-Protokolls verwendeten Nachrichten-Authentifikations-Funktionen und Schlüsselerzeugungs-Funktionen sind in [3] und [4] beschrieben. Ferner ist in [4] eine als Rijndael-Funktion bezeichnete Blockchiffren-Verschlüsselungsfunktion beschrieben.

Eine Übersicht über verschiedene

Schlüsselableitungsfunktionen ist in [5] zu finden.

Ein weiteres Schlüsselableitungsverfahren ist in [6] -beschrieben.

Aus der EP 1 156 694 A1 ist ein Funkkomanunikationsgerät sowie ein Verfahren zur Funkkommunikation bekannt, welches es einem Mobilgerät ermöglichen, eine Verschlüsselungs- sowie Integritätsfunktion auf den Datenübertragungsschichten zwei oder höher zu gewährleisten. Hierzu weist das mobile Endgerät eine Verschlüsselungs- bzw. Integritätsverarbeitungseinheit auf, welche zwischen einer Funkkommunikationssteuerungseinheit und einer Anschlusseinheit geschaltet ist. Dabei führt die Verschlüsselungsintegritätsverarbeitungseinheit nur eine Verschlüsselungsverarbeitung auf so genannten transparenten Daten, wie beispielsweise Sprachdaten, welche zwischen der Anschlusseinheit und der Funkkommunikationseinheit übertragen werden, durch. Des Weiteren wird durch die VerschlüsselungsIntegritätsverarbeitungseinheit eine Verschlüsselung und/oder eine Integritätsverarbeitung auf nicht transparenten Daten, welche zu und von der Funkkommunikationssteuereinrichtung übertragen werden, durchgeführt.

Der Erfindung liegt das Problem zugrunde, die kryptographische Sicherheit in einem Mobilfunksystem zu erhöhen.

Das Problem wird durch das Verfahren zum Bilden und Verteilen kryptographischer Schlüssel in einem Mobilfunksystem und durch das Mobilfunksystem mit den Merkmalen gemäß den unabhängigen Patentansprüchen gelöst.

Ein Verfahren zum Bilden und Verteilen kryptographischer Schlüssel in einem Mobilfunksystem geht von mindestens einem Mobilfunksystem mit einem Mobilfunkendgerät, einem ersten Computer, vorzugsweise einem Computer eines besuchten Kommunikationsnetzes (Visited Network), einem Computer eines Heimat-Kommunikationsnetzes (Home Network) sowie mindestens einem zweiten Computer, vorzugsweise eingerichtet als Applikationsserver-Computer aus. Das mindestens eine Mobilfunkendgerät befindet sich vorzugsweise in dem Bereich des besuchten Kommunikationsnetzes und hat sich gegenüber dem Heimat-Kommunikationsnetz und dem besuchten Kommunikationsnetz authentifiziert. Es ist in diesem Zusammenhang anzumerken, dass das besuchte Kommunikationsnetz und das Heimat-Kommunikationsnetz identisch sein können. Im Rahmen der Authentifikation wurde Authentifikations-Schlüsselmaterial gebildet, welches in dem Mobilfunkendgerät und in dem Computer des Heimat-Kommunikationsnetzes verfügbar und gespeichert ist. Bei dem Verfahren werden von dem Mobilfunkendgerät und dem Computer des Heimat-Kommunikationsnetzes jeweils unter Verwendung des Authentifikations-Schlüsselmaterials ein erster kryptographischer Schlüssel und ein zweiter kryptographischer Schlüssel gebildet. So sind in dem Mobilfunkendgerät und in dem Computer des Heimat-Kommunikationsnetzes jeweils der erste Schlüssel und der zweite Schlüssel verfügbar und gespeichert.

Der erste und der zweite Computer können alternativ beide als Applikationsserver-Computer eingerichtet sein.

Der erste kryptographische Schlüssel wird, vorzugsweise von dem Computer des Heimat-Kommunikationsnetzes (alternativ von dem Mobilfunkendgerät), dem ersten Computer, vorzugsweise somit dem Computer des besuchten Kommunikationsnetzes, übermittelt. Ferner wird der zweite kryptographische Schlüssel dem zweiten Computer, vorzugsweise dem Applikationsserver-Computer, übermittelt, vorzugsweise von dem Computer des Heimat-Kommunikationsnetzes, alternativ von dem Mobilfunkendgerät.

Ein Mobilfunksystem weist mindestens ein Mobilfunkendgerät auf, in dem als Ergebnis einer Authentifikation zwischen dem Mobilfunkendgerät und einem Computer eines Heimat-Kommunikationsnetzes des Mobilfunkendgerätes, Authentifikations-Schlüsselmaterial gespeichert ist. Ferner weist das Mobilfunksystem einen ersten Computer, vorzugsweise einen Computer eines besuchten Kommunikationsnetzes auf sowie einen Computer des Heimat-Kommunikationsnetzes. In dem Computer des Heimat-Kommunikationsnetzes ist, ebenfalls als Ergebnis der Authentifikation des Mobilfunkendgerätes bei dem Heimat-Kommunikationsnetz, Authentifikations-Schlüsselmaterial gespeichert. Weiterhin ist in dem Mobilfunksystem mindestens ein zweiter Computer, vorzugsweise eingerichtet als ein Applikationsserver-Computer, vorgesehen. Das Mobilfunkendgerät befindet sich in dem besuchten Kommunikationsnetz. Das Mobilfunkendgerät und der Computer des Heimat-Kommunikationsnetzes weisen jeweils eine Kryptoeinheit auf zur jeweiligen Bildung eines ersten kryptographischen Schlüssels und eines zweiten kryptographischen Schlüssels unter Verwendung des Authentifikations-Schlüsselmaterials. Der Computer des besuchten Kommunikationsnetzes weist ferner einen Speicher auf zur Speicherung des ersten kryptographischen Schlüssels, welcher dem Computer von dem Mobilfunkendgerät oder von dem Computer des Heimat-Kommunikationsnetzes übermittelt worden ist. Ferner weist der Applikationsserver-Computer einen Speicher auf zur Speicherung des zweiten kryptographischen Schlüssels, welcher dem Applikationsserver-Computer von dem Mobilfunkendgerät oder dem Computer des Heimat-Kommunikationsnetzes übertragen worden ist.

Anschaulich kann die Erfindung darin gesehen werden, dass das im Rahmen der Authentifikation gebildete Authentifikations-Schlüsselmaterial nicht unmittelbar und vollständig an die Applikationsserver-Computer und den Computer des besuchten Kommunikationsnetzes übermittelt wird, sondern dass aus zumindest einem Teil des Authentifikations-Schlüsselmaterials Sitzungsschlüssel abgeleitet werden, welche im Rahmen der späteren Kommunikation zwischen dem Mobilfunkendgerät und den Applikationsserver-Computern bzw. dem Computer des besuchten Kommunikationsnetzes beispielsweise zur Verschlüsselung zu sichernder Daten verwendet werden. Damit ist die kryptographische Sicherheit im Rahmen der Kommunikation zwischen dem Mobilfunkendgerät und dem jeweiligen Applikationsserver-Computer vor einem Angriff seitens des Computers in dem besuchten Kommunikationsnetz gesichert und ferner ist die Kommunikation zwischen dem Mobilfunkendgerät und dem Computer des besuchten Kommunikationsnetzes gesichert gegen Angriffe seitens des Applikationsserver-Computers, da der Applikationsserver-Computer und der Computer des besuchten Kommunikationsnetzes jeweils Schlüssel haben, die nicht dazu geeignet sind, Rückschlüsse auf den jeweiligen anderen Schlüssel zu ziehen und damit eine Entschlüsselung der mit dem jeweiligen Schlüssel der anderen Instanz verschlüsselten Daten zu ermöglichen.

Die erhöhte kryptographische Sicherheit wird erfindungsgemäß erreicht, ohne dass es erforderlich ist, das im Rahmen von UMTS standardisierte Kommunikationsprotokoll zu verändern.

Bevorzugte Weiterbildungen der Erfindung ergeben sich aus den abhängigen Ansprüchen.

Die folgenden Ausgestaltungen der Erfindung betreffen sowohl das Verfahren zum Bilden und Verteilen kryptographischer Schlüssel in einem Mobilfunksystem als auch das Mobilfunksystem.

Der erste kryptographische Schlüssel und der zweite kryptographische Schlüssel werden gemäß einer Ausgestaltung der Erfindung unter Verwendung mittels einer Schlüsselableitungsfunktion-gebildet.

Gemäß der Erfindung ist es vorgesehen, dass der erste kryptographische Schlüssel und der zweite kryptographische Schlüssel derart gebildet werden, dass

- aus dem ersten kryptographischen Schlüssel kein Rückschluss auf den zweiten kryptographischen Schlüssel möglich ist,
- aus dem zweiten kryptographischen Schlüssel kein Rückschluss auf den ersten kryptographischen Schlüssel möglich ist und
- aus dem ersten kryptographischen Schlüssel oder dem zweiten kryptographischen Schlüssel kein Rückschluss auf das Authentifikations-Schlüsselmaterial möglich ist.

Das Authentifikations-Schlüsselmaterial kann mindestens zwei kryptographische Schlüssel aufweisen beispielsweise für den Fall, dass das Mobilfunksystem als ein auf einem 3GPP-Standard basierendes Mobilfunksystem ist, welches vorzugsweise ein IP-basiertes Multimedia-Subsystem aufweist, und zwar einen Integritätsschlüssel und einen Übertragungsschlüssel.

In diesem Fall werden vorzugsweise der erste kryptographische Schlüssel und der zweite kryptographische Schlüssel aus dem Übertragungsschlüssel abgeleitet.

Auf andere Weise ausgedrückt bedeutet dies, dass gemäß dieser Ausgestaltung der Erfindung in dem Mobilfunkendgerät und in dem Computer des Heimat-Kommunikationsnetzes weitere kryptographische Schlüssel aus dem Übertragungsschlüssel abgeleitet werden.

Im Gegensatz zu dem Integritätsschlüssel, den das Heimat-Kommunikationsnetz gemäß [1] direkt zur Integritätssicherung der IMS-Signalisierung an den Computer des besuchten Kommunikationsnetzes, vorzugsweise an einen P-CSCF-Computer übermittelt, wird der Übertragungsschlüssel selbst erfindungsgemäß nicht von dem Computer des Heimat-Kommunikationsnetzes, vorzugsweise von dem S-CSCF-Computer, weitergegeben. Der Übertragungsschlüssel wird dagegen dafür verwendet, einen oder mehrere neue Schlüssel durch den Einsatz einer geeigneten Schlüsselableitungsfunktion abzuleiten, wobei die Ableitungsfunktion vorzugsweise auf einer Pseudo-Zufalls-Funktion basiert. Der mittels der Schlüsselableitungsfunktion gebildete erste abgeleitete Schlüssel wird als erster kryptographischer Schlüssel von dem S-CSCF-Computer an den P-CSCF-Computer übermittelt, wenn der erste kryptographische Schlüssel für den Schutz der Vertraulichkeit übertragener Daten benötigt wird.

In dem Mobilfunksystem können grundsätzlich eine beliebige Anzahl von Kommunikationsnetzen und Mobilfunkendgeräten vorgesehen sein sowie eine beliebige Anzahl von Applikationsserver-Computern.

Bei einer Mehrzahl von Applikationsserver-Computern ist es gemäß einer Ausgestaltung der Erfindung vorgesehen, dass von dem Mobilfunkendgerät und dem Computer des Heimat-Kommunikationsnetzes für jeden zusätzlichen Applikationsserver-Computer jeweils unter Verwendung des Authentifikations-Schlüsselmaterials ein zusätzlicher kryptographischer Schlüssel gebildet wird. Der jeweilige zusätzliche kryptographische Schlüssel wird - vorzugsweise von dem Computer des Heimat-Kommunikationsnetzes - an den zugehörigen Applikationsserver-Computer übermittelt.

In diesem Fall ist es vorteilhaft, die Mehrzahl bzw. Vielzahl kryptographischer Schlüssel mittels derselben Schlüsselableitungsfunktion, jedoch unter Verwendung geeigneter unterschiedlicher Eingabeparameter zu erzeugen. Durch Verwendung geeigneter Eingabeparameter, vorzugsweise einer qualitativ hochwertigen Zufallszahl wird für die Schlüsselableitungsfunktion sichergestellt, dass der Empfänger des abgeleiteten Schlüssels, beispielsweise ein Applikationsserver-Computer oder der Computer des besuchten Kommunikationsnetzes, nicht in der Lage ist, auf den Basisschlüssel, d.h. den Übertragungsschlüssel, allgemein auf das Authentifikations-Schlüsselmaterial, zurückzuschließen.

Solche Eingabeparameter können sowohl dem Mobilfunkendgerät als auch dem Computer des Heimat-Kommunikationsnetzes bekannte Parameter sein, wie beispielsweise die Parameter, die sich aus der jeweils aktuellen Authentifikation gemäß dem IMS-AKA-Protokoll ergeben. Mittels des zweiten kryptographischen Schlüssels wird für den Schutz weiterer Nachrichten über die IMS-Signalisierung hinaus, beispielsweise für den Schutz von HTTP-Nachrichten, welche zwischen dem Mobilfunkendgerät und einem als Presence-Server-Computer ausgestalteten Applikationsserver-Computer vorgesehen ist oder von gemäß dem MIKEY-Protokoll ausgestalteten Nachrichten zwischen dem Mobilfunkendgerät und einem Multicast-Service-Center-Computer aus dem Übertragungsschlüssel abgeleitet.

Es ist erfindungsgemäß vorgesehen, im Bedarfsfall eine beliebige Anzahl weiterer kryptographischer Schlüssel aus dem Übertragungsschlüssel, allgemein aus dem Authentifikations-Schlüsselmaterial, abzuleiten.

Als Schlüsselableitungsverfahren kann grundsätzlich jedes beliebige geeignete kryptographische Verfahren zur Ableitung eines kryptographischen Schlüssels eingesetzt werden, beispielsweise die in [5] beschriebenen Verfahren, alternativ eine Variante des in [3] und [4] beschriebenen Schlüsselableitungsverfahrens gemäß MILENAGE.

Wird für die Bildung einer Vielzahl von kryptographischen Schlüsseln als Sitzungsschlüssel dieselbe Schlüsselableitungsfunktion verwendet, so braucht sowohl im Mobilfunkendgerät als auch in dem Computer des Heimat-Kommunikationsnetzes lediglich eine kryptographische Schlüsselableitungsfunktion implementiert werden.

Ein weiterer Vorteil der Erfindung ist darin zu sehen, dass sich ein Benutzer eines Mobilfunkendgerätes nur einmal für den Zugang zum IMS und den darüber angebotenen elektronischen Diensten authentifizieren muss. Für den Zugang zu den IMSbasierten Applikationen bzw. Diensten sind keine weiteren Authentifikationen mehr erforderlich.

Ferner werden erfindungsgemäß Änderungen an existierenden standardisierten Protokollen vermieden, beispielsweise müssen das in [1] beschriebene Authentifikationsprotokoll IMS-AKA oder das Protokoll zur Kommunikation zwischen dem S-CSCF-Computer und dem HSS-Computer nicht verändert werden, da keine zusätzlichen Parameter zwischen den jeweils Beteiligten Computern ausgetauscht werden müssen.

Durch die Verwendung des Übertragungsschlüssels (und nicht des Integritätsschlüssels) als Basisschlüssel zur Schlüsselableitung wird zusätzlich vermieden, dass Unterschiede bei der Verwendung des Schlüssels zwischen verschiedenen Versionen des Standards (UMTS-3GPP Release 5 und UMTS-3GPP Release 6, usw.) entstehen, die zu höheren Standardisierungs- und Integrationsaufwänden führen würden.

Ferner ist es erfindungsgemäß ermöglicht, die Schlüsselableitung so zu gestalten, dass der Schlüssel nur für die Sicherheitsbeziehungen zwischen dem Mobilfunkendgerät und einer bestimmten Netzeinheit und nicht für andere Sicherheitsbeziehungen verwendbar ist und für andere Sicherheitsbeziehungen keine Rückschlüsse zulässt, insbesondere keine Ermittlung der im Rahmen anderer Sicherheitsbeziehungen verwendeten kryptographischen Schlüsseln.

Ferner ist es möglich, die Schlüsselableitung so zu gestalten, dass das Mobilfunkendgerät und der S-CSCF-Computer allein aus dem Übertragungsschlüssel, aus Parametern, die sich aus der jeweils aktuellen Authentifikation gemäß dem IMS-AKA-Kommunikationsprotokoll ergeben, sowie der Identität des Applikationsserver-Computers, den abgeleiteten Schlüssel berechnen.

Dies hat den zusätzlichen Vorteil, dass der abgeleitete Schlüssel für einen bestimmten Applikationsserver-Computer unabhängig berechnet werden kann von den Schlüsseln für andere Applikationsserver-Computer. Dies ist insbesondere in dem Fall von erheblicher Bedeutung, wenn die Notwendigkeit zur Berechnung von abgeleiteten kryptographischen Schlüsseln für Applikationsserver-Computer nicht gleichzeitig entsteht, da der Benutzer verschiedene Applikationsserver-Computer zu unterschiedlichen Zeitpunkten und manche auch gar nicht kontaktiert.

Als zusätzliche Parameter für die Schlüsselableitungsfunktion wird gemäß einer anderen Ausgestaltung der Erfindung mindestens einer der zuvor gebildeten kryptographischen Schlüssel verwendet. Anders ausgedrückt bedeutet dies, dass ein oder mehrere zuvor gebildete und somit verfügbare kryptographische Schlüssel als Eingangswerte für die Schlüsselableitungsfunktion verwendet werden und damit als Grundlage dienen zur Bildung nachfolgender kryptographischer Schlüssel.

Durch die Erfindung wird somit anschaulich das Problem gelöst, auf der Basis einer bestehenden IMS-Sicherheitsinfrastruktur in einem Mobilfunksystem eine zusätzliche Kommunikation zwischen dem Mobilfunkendgerät und den Applikationsserver-Computern für IMS-basierte Anwendungen bzw. Dienste zu schützen, die nicht durch die bisherige Sicherheit des IMS-Mobilfunksystems erfasst wird.

Eine solche Kommunikation kann z.B. auf dem HTTP-Protokoll und dem MIKEY-Protokoll, allgemein auf jedem Kommunikationsprotokoll der OSI-Schicht-7, d.h. der Anwendungsschicht, basieren.

Zur Sicherung der Kommunikation erzeugt der beschriebene Mechanismus Sitzungsschlüssel, die von dem im Rahmen einer IMS-Authentifikation gemäß [1] gebildeten Integritätsschlüssel und/oder Übertragungschlüssel abgeleitet werden. Insbesondere wird das Problem gelöst, dass verschiedene Netzinstanzen wie Applikationsserver-Computer und P-CSCF-Computer unterschiedliche Schlüssel erhalten, welche keine Rückschlüsse auf andere kryptographische Schlüssel zulassen, so dass auch eine Netzinstanz, d.h. ein Computer eines besuchten Kommunikationsnetzes, nicht die Vertraulichkeit der Nachrichten, die der Benutzer mit einer anderen Netzinstanz, d.h. mit einem anderen Computer eines Kommunikationsnetzes, austauscht, verletzen kann.

Zusätzlich wird erfindungsgemäß ein Mechanismus verwendet, der es ermöglicht, mit nur einer Schlüsselableitungsfunktion voneinander unabhängige kryptographische Schlüssel für unterschiedliche Anwendungen zu erzeugen. Damit wird der Aufwand, mehrere solcher Schlüsselableitungsfunktionen zu implementieren, vermieden.

Zusätzlich werden, wie oben beschrieben, mehrfache Authentifikationen des Benutzers, d.h. des Mobilfunkendgerätes vermieden.

Anschaulich kann die Erfindung somit darin gesehen werden, dass aus dem im Rahmen der IMS-Registrierung erzeugten Übertragungsschlüssel weitere kryptographische Schlüssel, die für die Verschlüsselung zwischen Nachrichten, welche zwischen dem Mobilfunkendgerät und dem P-CSCF-Computer sowie für die Sicherheitsbeziehungen zwischen dem Mobilfunkendgerät und dem Applikationsserver-Computern verwendet werden können abgeleitet werden in einer solchen Weise, dass die oben beschriebenen Vorteile erzielt werden.

Ausführungsbeispiele der Erfindung sind in den Figuren dargestellt und werden im Folgenden näher erläutert.

Es zeigen

Figur 1     ein Blockdiagramm eines Mobilfunksystems gemäß einem Ausführungsbeispiel der Erfindung;

Figur 2     ein Nachrichtenflussdiagramm, in dem der Nachrichten- fluss des Bildens und Verteilens kryptographischer Schlüssel gemäß einem Ausführungsbeispiel der Erfin- dung dargestellt ist; und

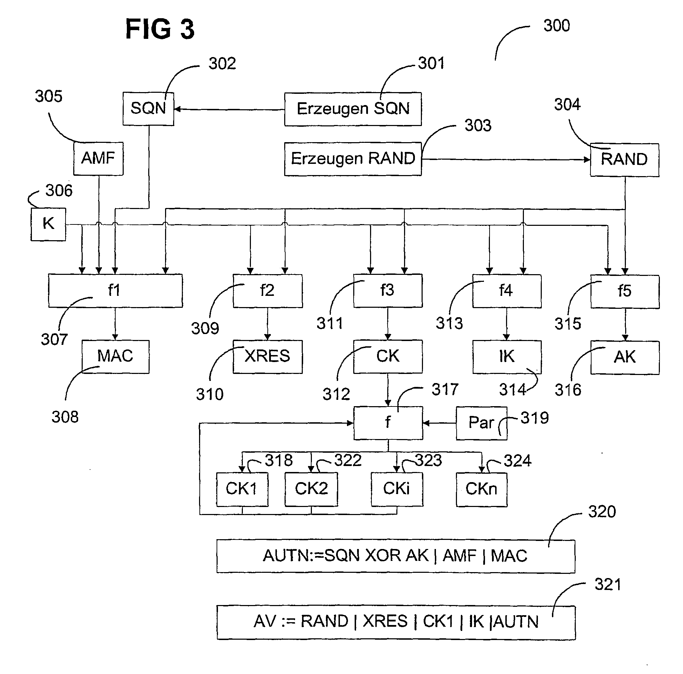

Figur 3     ein Blockdiagramm, in dem das Bilden kryptographi- scher Schlüssel gemäß einem Ausführungsbeispiel der Erfindung dargestellt ist.

Auch wenn im folgenden Ausführungsbeispiel aus Gründen der einfacheren Darstellung nur ein Mobilfunkendgerät, ein Heimat-Kommunikationsnetzwerk sowie ein besuchtes Kommunikationsnetzwerk dargestellt ist, so ist die Erfindung auf eine beliebige Anzahl von Mobilfunkendgeräten und Kommunikationsnetze anwendbar.

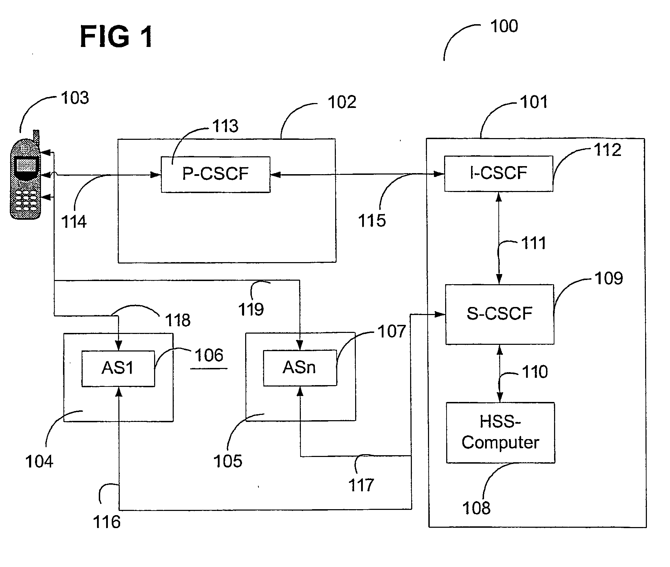

Das in Fig.1 dargestellte Mobilfunksystem 100 ist gemäß dem UMTS-Standard Release 5 eingerichtet.

Das Mobilfunksystem 100 gemäß dem bevorzugten Ausführungsbeispiel weist ein Heimat-Kommunikationsnetz 101 (Home Network), ein besuchtes Kommunikationsnetz 102 (Visited Network), ein Mobilfunkendgerät 103 sowie sich in weiteren Kommunikationsnetzen 104, 105 sich befindende Applikationsserver-Computer 106, 107, auf.

Im Folgenden werden nur die für die Erfindung relevanten Elemente des Mobilfunksystems 100 gemäß dem UMTS-Standard Release 5 kurz erläutert.

In dem Heimat-Kommunikationsnetz 101 ist ein Home Subscriber Server-Computer (HSS-Computer) 108 vorgesehen. In dem HSS-Computer sind zu jedem dem Heimat-Netzwerk 101 zugeordneten Mobilfunkgerät 103 und den Besitzer des Mobilfunkendgerätes 103 charakterisierende Daten, beispielsweise ein Benutzer-Service-Profil, gespeichert.

Mit dem HSS-Computer 108 ist ein Serving Call State Control Function-Computer (S-CSCF-Computer) 109 mittels einer ersten Kommunikationsverbindung 110 gekoppelt.

Das gesamte Callmanagement, sowohl paketvermittelt als auch leitungsvermittelt, wird von einem CSCF-Computer kontrolliert. Einige weitere Aufgaben der CSCF-Computer sind das Verwalten von Abrechnungen (Billing), die Adressverwaltung und die Bereitstellung von Auslösemechanismen zum Auslösen spezieller vorgegebener Dienste und Knoten.

Mittels einer zweiten Kommunikationsverbindung 111 ist ein Interrogating-CSCF-Computer (I-CSCF-Computer) 112 mit dem S-CSCF-Computer 109 gekoppelt. In dem I-CSCF-Computer 112, welcher sich in dem Heimat-Kommunikationsnetz 101 befindet, ist die IP-Adresse des jeweils verantwortlichen HSS-Computers 108 gespeichert, so dass bei Beginn der Authentifikation eines Mobilfunkendgerätes 103 bei dem Heimat-Kommunikationsnetz 101 ermöglicht ist, den zuständigen HSS-Computer 108 für die Authentifikation zu ermitteln. Der I-CSCF-Computer 112 bildet anschaulich die "Kommunikationsschnittstelle" des besuchten Kommunikationsnetzes 102 zu dem Heimat-Kommunikationsnetz 101.

In dem besuchten Kommunikationsnetz 102 ist ein Proxy-CSCF-Computer (P-CSCF-Computer) 113 vorgesehen, der gemeinsam mit entsprechend in dem besuchten Kommunikationsnetz 102 vorhandenen Basisstationen eine Luftschnittstelle bereitstellt zum Aufbau einer Funkverbindung 114 zu dem Mobilfunkendgerät 103, das sich in dem Bereich befindet, dem der P-CSCF-Computer 113 zugeordnet ist.

Der P-CSCF-Computer 113 ist über eine Funkverbindung oder eine Festnetz-Kommunikationsverbindung 115 über eine beliebige Anzahl von weiteren Kommunikationsnetzen mit dem I-CSCF-Computer 112 des Heimat-Kommunikationsnetzes 101 verbunden.

Weiterhin sind mit dem S-CSCF-Computer 109 des Heimat-Kommunikationsnetzes 101 die Applikationsserver-Computer 106, 107 in den weiteren Kommunikationsnetzen 104, 105 gekoppelt, gemäß diesem Ausführungsbeispiel mittels weiterer Funkverbindungen oder Festnetz-Kommunikationsverbindung 116, 117. Mittels zusätzlicher Funkverbindungen oder Festnetz-Kommunikationsverbindung 118, 119 sind die Applikationsserver-Computer 106, 107 mit dem Mobilfunkendgerät 103 gekoppelt.

Gemäß diesem Ausführungsbeispiel weisen die einzelnen Computer jeweils einen Mikroprozessor, einen oder mehrere Speicher sowie entsprechende Kommunikationsschnittstellen auf, so dass ein Austausch elektronischer Nachrichten zwischen den einzelnen Computern und dem Mobilfunkendgerät 103 ermöglicht ist.

Die Computer und das Mobilfunkendgerät 103 sind ferner derart eingerichtet, dass die im Folgenden beschriebenen Verfahrensschritte durchgeführt werden können und die im Folgenden beschriebenen elektronischen Nachrichten gebildet, kodiert bzw. dekodiert und gesendet bzw. empfangen werden können.

Zum Bilden der elektronischen Nachrichten wird gemäß diesem Ausführungsbeispiel zumindest teilweise das Session Initiation Protocol (SIP) verwendet.

Damit ein Mobilfunkendgerät 103 einen von einem Applikationsserver-Computer 106, 107 bereitgestellten Dienst in Anspruch nehmen kann ist es erforderlich, dass eine gegenseitige Authentifikation zwischen dem Mobilfunkendgerät 103 und dem Heimat-Kommunikationsnetz 101 stattfindet und erfolgreich durchgeführt wird.

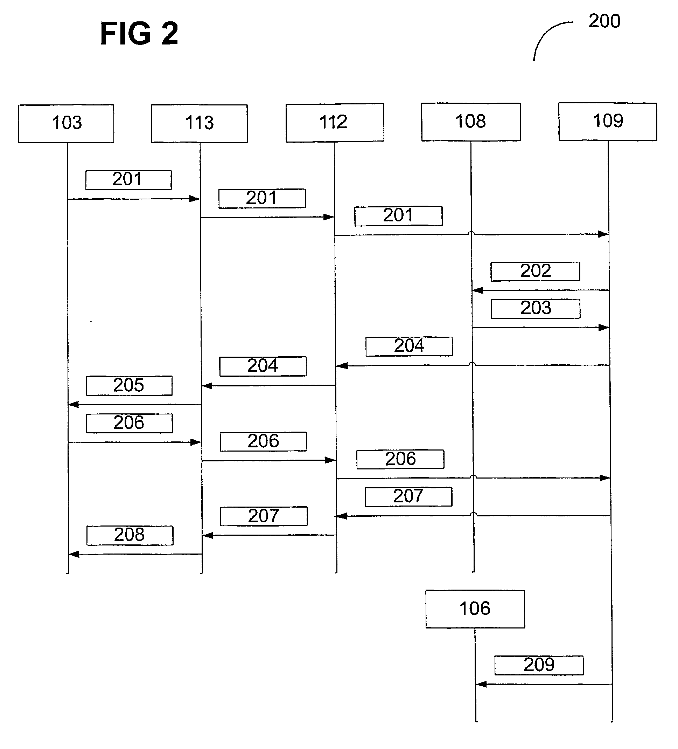

Zu Beginn des Verfahrens zur Authentifikation und zum Bilden und Verteilen kryptographischer Schlüssel, welche im Rahmen der Signalisierung und im Rahmen des Austauschs verschlüsselter elektronischer Nachrichten verwendet werden, wird von dem Mobilfunkendgerät 103, wie in dem Nachrichtenflussdiagramm 200 in Fig. 2 dargestellt ist, eine SIP-Registrierungs-Nachricht 201 an den P-CSCF-Computer 113 gesendet. Die SIP-Registrierungs-Nachricht 201 wird nach Empfang von dem P-CSCF-Computer 113 an den I-CSCF-Computer 112 in dem Heimat-Kommunikationsnetz 101 des die SIP-Registrierungs-Nachricht 201 sendenden Mobilfunkendgerätes 103 weitergeleitet. Der I-CSCF-Computer 112 leitet die SIP-Registrierungs-Nachricht 201 ebenfalls weiter, und zwar an den zugehörigen S-CSCF-Computer 109 des Heimat-Kommuikationsnetzes 101.

Nach Erhalt der SIP-Registrierungs-Nachricht 201 wird von den S-CSCF-Computer 109 überprüft, ob das die SIP-Registrierungs-Nachricht 201 sendende Mobilfunkendgerät 103 schon in dem S-CSCF-Computer 109 registriert ist oder nicht. Ist dies nicht der Fall, dann sendet der S-CSCF-Computer 109 über die erste Kommunikationsverbindung 110 eine Cx-Authentifizierungsdaten-Anforderungsnachricht 202 an den HSS-Computer 108, mit welcher der S-CSCF-Computer 109 bei dem HSS-Computer 108 für das Mobilfunkendgerät 103 neue Authentifizierungsdaten anfordert.

In dem HSS-Computer 108 werden in Reaktion auf die Cx-Authentifizierungsdaten-Anforderungsnachricht 202 ein oder mehrere Sätze von Authentifizierungsdaten auf die im Folgenden beschriebene Weise erzeugt und in einer Authentifizierungsdaten-Nachricht 203 an den S-CSCF-Computer 109 übertragen.

In einer alternativen Ausführungsform werden die Authentifizierungsdaten von dem S-CSCF-Computer 109 selbst erzeugt.

Von dem HSS-Computer 108, alternativ von einem Computer eines dem HSS-Computer 108 zugeordneten Authentication Center-Computer wird eine fortlaufende Sequenznummer SQN 302 erzeugt (Schritt 301).

Ferner wird in einem zusätzlichen Schritt (Schritt 303) eine Zufallszahl RAND 304 gebildet.

Ferner wird als Eingabeparameter für die im Folgenden beschriebenen Operationen ein vorgegebenes so genanntes Authentication Management Field AMF 305 verwendet.

Ferner wird ein nur dem HSS-Computer 108 (in der alternativen Ausführungsform dem S-CSCF-Computer 109) und dem Mobilfunkendgerät 103 bekannter geheimer Schlüssel K 306 im Rahmen der im Folgenden beschriebenen Operationen verwendet.

In diesem Zusammenhang ist anzumerken, dass das Bilden eines im Folgenden beschriebenen Authentifizierungsvektors AV auch in dem S-CSCF-Computer 109 oder in einem vergleichbaren Netzelement in dem Heimat-Kommunikationsnetz 101 erfolgen kann, in welchem Fall die oben beschriebenen Größen in der jeweiligen Rechnereinheit verfügbar sind.

Unter Verwendung des geheimen Schlüssels K 306, des Authentication Management Fields AMF 305, der Sequenznummer SQN 302 und der Zufallszahl RAND 304 wird mittels einer ersten Nachrichten-Authentifikations-Funktion f1 307, wie sie beispielsweise in [3] und [4] beschrieben ist (307) ein Message Authentication Code MAC 308 gebildet gemäß folgender Vorschrift:

$$\mathrm{MAC} = \mathrm{f1}_K(\mathrm{SQN}|\mathrm{RAND}|\mathrm{AMF}). \tag{1}$$

Das Symbol "I" symbolisiert im Rahmen dieser Beschreibung eine Konkatenation der links bzw. rechts von dem Symbol stehenden Größen.

Die im Folgenden verwendeten Nachrichten-Authentifikations-Funktionen f1 und f2 sowie die Schlüsselerzeugungs-Funktionen f3, f4, f5 sind in [3] und [4] beschrieben.

Mittels einer zweiten Nachrichten-Authentifikations-Funktion f2 309 wird unter Verwendung des geheimen Schlüssels K 306 und der Zufallszahl RAND 304 ein erwarteter Antwortwert XRES 310 gebildet:

$$XRES = f2_K(RAND). \qquad (2)$$

Mittels einer ersten Schlüsselerzeugungs-Funktion f3 311 wird unter Verwendung des geheimen Schlüssels K 306 und der Zufallszahl RAND 304 ein Übertragungsschlüssel CK 312 gemäß folgender Vorschrift gebildet:

$$CK = f3_K(RAND). \qquad (3)$$

Ferner wird unter Verwendung einer zweiten Schlüsselerzeugungs-Funktion f4 313 und unter Verwendung des geheimen Schlüssels K 306 und der Zufallszahl RAND 304 ein Integritätsschlüssel IK 314 gebildet gemäß folgender Vorschrift:

$$IK = f4_K(RAND). \qquad (4)$$

Mittels einer dritten Schlüsselerzeugungsfunktion f5 315 wird unter Verwendung ebenfalls des geheimen Schlüssels K 306 und der Zufallszahl RAND 304 ein Anonymitätsschlüssel AK 316 berechnet gemäß folgender Vorschrift:

$$AK = f5_K(RAND). \qquad (5)$$

Von dem HSS-Computer 108 wird ferner ein Authentifizierungstoken AUTN 320 gebildet gemäß folgender Vorschrift:

$$AUTN = SQN \oplus AK | AMF | MAC \qquad (6)$$

Die oben beschriebenen berechneten Werte, d.h. der Authentication Token AUTN, der erwartete Antwortwert XRES 310, der Übertragungsschlüssel CK 312 und der Integritätsschlüssel IK 314 werden an den S-CSCF-Computer 109 übertragen.

Erfindungsgemäß wird unter Verwendung einer Schlüsselableitungsfunktion f 317 aus dem Übertragungsschlüssel CK 312 in dem S-CSCF-Computer 109 unter Verwendung im Weiteren beschriebener Eingabeparameter 318 ein erster abgeleiteter Schlüssel CK1 319 auf folgende Weise gebildet.

Als Schlüsselableitungsfunktion f 317 wird gemäß einem ersten Ausführungsbeispiel der Erfindung eine Pseudo-Zufallsfunktion PRF eingesetzt, die beispielsweise auf dem Verfahren HMAC-SHA1 basiert. Die Schlüsselableitungsfunktion f 317 ist im Wesentlichen gemäß dem in [6] unter Abschnitt 5.5 spezifizierten Schlüsselableitungsverfahren ausgebildet.

Somit wird der erste abgeleitete Schlüssel CK1 gemäß folgender Vorschrift gebildet:

$$CK1 = f_K(CK | Par1 | random), \qquad (7)$$

wobei der Eingabeparameter Par1 optional ist und wobei random geeignetes Zufallsmaterial, beispielsweise gebildet gemäß folgender Vorschrift:

$$random = RAND|AUTN|XRES, \qquad (8)$$

ist, wobei RAND|AUTN während des Authentifikationsverfahrens gemäß [1] als eine im Folgenden beschriebene Authentifikations-Anforderungsnachricht 204 an das Mobilfunkendgerät 103 übermittelt wird.

Das Mobilfunkendgerät 103 verwendet zur Bildung des Zufallswerts random an Stelle des erwarteten Antwortwerts XRES den von ihm gebildeten Antwortwert RES.

Ein aus dem Wert RES abgeleiteter Wert wird im Rahmen des im Folgenden beschriebenen Verfahrens gemäß [1] von dem Mobilfunkendgerät 103 als Authentifikationsantwort an den S-CSCF-Computer 109 übermittelt.

Es ist in diesem Zusammenhang anzumerken, dass die Bildung der abgeleiteten kryptographischen Schlüssel in dem S-CSCF-Computer 109 erfolgen kann oder in einem vergleichbaren geeigneten Netzelement in dem Heimat-Kommunikationsnetz 101.

Ferner wird von dem S-CSCF-Computer 109 gemäß folgender Vorschrift der angeforderte Authentifizierungsvektor AV 321 von dem S-CSCF-Computer 109 gebildet:

$$AV = RAND|XRES|CK1|IK|AUTN. \qquad (9)$$

Von dem S-CSCF-Computer 109 wird die SIP-Authentifikations-Anforderungsnachricht 204 an den I-CSCF-Computer 112 übermittelt und von diesem an den P-CSCF-Computer 113 des besuchten Kommunikationsnetzes 102 weitergeleitet. In der SIP-Authentifikations-Anforderungsnachricht 204 sind die Zufallszahl RAND 306, das Authentifikations-Token 320 sowie der Integritätsschlüssel IK enthalten. Im Gegensatz zum Authentifikationsverfahren gemäß [1] ist erfindungsgemäß nicht der Übertragungsschlüssel CK enthalten und wird somit auch nicht dem P-CSCF-Computer in dem besuchten Kommunikationsnetz einem Nutzer übermittelt. Anstatt dessen ist in der SIP-Authentifikations-Anforderungsnachricht 204 der erste abgeleitete Schlüssel CK1 enthalten.

In dem Mobilfunkendgerät 103 wird unter Verwendung der Nachrichten-Authentifikationsfunktionen f1 und f2 sowie der Schlüsselerzeugungsfunktion f3, f4 und f5 ebenfalls die oben beschriebenen Größen bildet und zur Authentifikation des besuchten Kommunikationsnetzes 102 verwendet. Hierzu sind die Funktionen f1, f2, f3, f4 und f5 ebenfalls in dem Mobilfunkendgerät 103 implementiert.

Ferner verfügt das Mobilfunkendgerät 103 selbstverständlich über den geheimen Schlüssel K und die Zufallszahl RAND 306. Ferner sind die im Folgenden beschriebenen zusätzlichen Angaben zu den Parametern Pari zur Bildung der abgeleiteten Schlüssel unter Verwendung der Schlüsselableitungsfunktion 317 ebenfalls in dem Mobilfunkendgerät 103 verfügbar.

Vor Weiterleiten der Authentifikations-Anforderungsnachricht 204 speichert der P-CSCF-Computer 113 den Integritätsschlüssel IK 314 sowie den ersten abgeleiteten Schlüssel CK1 , entfernt diese aus der Authentifikations-Anforderungsnachricht 204 und übermittelt eine reduzierte Authentifikations-Anforderungsnachricht 205 an das Mobilfunkendgerät 103.

Damit ist der Integritätsschlüssel IK 314 in dem P-CSCF-Computer 113 verfügbar, nicht aber in dem Mobilfunkendgerät 103.

Unter Verwendung des in dem Mobilfunkendgerät 103 wurde unter Verwendung des geheimen Schlüssels K 306 und der in dem Mobilfunkendgerät 103 verfügbaren Zufallszahl RAND 304 unter Verwendung der fünften und der dritten Schlüsselerzeugungs-funktion f5 315 der Anonymitätsschlüssel AK 316 gebildet.

Unter Verwendung des ersten Feldes des Authentifikations-Tokens 320 wird unter Bildung des Inhalts des ersten Feldes (SQN $\oplus$ AK) eine EXKLUSIV-ODER-Verknüpfung mit dem Anonymitätsschlüssel AK 316 gebildet und als Ergebnis erhält das Mobilfunkendgerät 103 die Sequenznummer SQN 302.

Unter Verwendung der Sequenznummer, dem in dem Authentifikations-Token 320 enthaltenen Authentication Management Field AMF 305, der Zufallszahl RAND 304, dem geheimen Schlüssel K 306 und der ersten Nachrichten-Authentifikationsfunktion f1 307 wird ein Endgeräte-Message Authentication Code gebildet, der mit dem in dem Authentifikations-Token 320 enthaltenen Message Authentication Code MAC 308 verglichen wird.

Stimmen diese beiden Werte miteinander überein, so ist die Authentifikation des Heimat-Kommunikationsnetzes 102 gegenüber dem Mobilfunkendgerät 103 erfolgreich und das Mobilfunkendgerät 103 berechnet einen Antwortwert RES unter Verwendung der Zufallszahl RAND 304, dem geheimen Schlüssel K 306 und der zweiten Nachrichten-Authentifikationsfunktion f2 309 und sendet einen aus RES abgeleiteten Antwortwert in einer SIP-Authentifikations-Antwortnachricht 206 an den P-CSCF-Computer 113, wie in [1] beschrieben.

Es ist anzumerken, dass das Mobilfunkendgerät 103 ferner unter Verwendung der ersten Schlüsselerzeugungsfunktion f3 311 und dem geheimen Schlüssel K 306 den Übertragungsschlüssel 312 sowie unter Verwendung der zweiten Schlüsselerzeugungs-funktion f4 313 und dem geheimen Schlüssel K 306 den Integritätsschlüssel IK 314 berechnet.

Die Authentifikations-Antwortnachricht 206 wird von dem P-CSCF-Computer 113 an den I-CSCF-Computer 112 und von diesem an den S-CSCF-Computer 109 weitergeleitet.

Der S-CSCF-Computer 109 neuen oder HSS-Computer 108 überprüfen den aus RES abgeleiteten Antwortwert, indem dieser mit dem aus der erwarteten Antwort XRES in analoger Weise abgeleiteten Wert verglichen wird. Bei Übereinstimmung der beiden Werte ist die Authentifikation des Mobilfunkendgeräts 103 gegenüber dem S-CSCF-Computer 109 erfolgreich.

Nunmehr kann auch in dem Mobilfunkendgerät 103 gemäß Vorschrift (8) der Wert random gebildet werden und anschließend der erste abgeleitete Schlüssel CK1 gemäß Vorschrift (7).

Eine Authentifikations-Bestätigungsnachricht 207, wird von dem S-CSCF-Computer 109 an den I-CSCF-Computer 112 übermittelt und von diesem an den P-CSCF-Computer 113 weitergeleitet.

Die Authentifikations-Bestätigungsnachricht 208 wird an das Mobilfunkendgerät 103 übermittelt zur Bestätigung der erfolgreichen gegenseitigen Authentifikation.

Ferner wird von dem S-CSCF-Computer 109 durch erneute Verwendung der Schlüsselableitungsfunktion f 317 und optional unter Verwendung eines zusätzlichen Eingabeparameters Par2 ein zweiter abgeleiteter Schlüssel CK2 322 gebildet gemäß folgender Vorschrift:

$$CK2 = f_K(CK, CK1|Par2|random). \tag{10}$$

Der zweite abgeleitete Schlüssel CK2 322 wird in einer Schlüsselnachricht 209 an den Applikationsserver-Computer 106, der im Rahmen der zukünftigen Verschlüsselung den zweiten abgeleiteten Schlüssel CK2 322 verwendet, übertragen.

In dem Mobilfunkendgerät 103 wird in entsprechender Weise wie in dem S-CSCF-Computer 109 ebenfalls der zweite abgeleitete Schlüssel CK2 322 gebildet.

Ist im Rahmen der Kommunikation mit zusätzlichen Applikationsserver-Computern zusätzliches Schlüsselmaterial, d.h. zusätzliche abgeleitete Schlüssel erforderlich, so werden zusätzliche abgeleitete Schlüssel CKi (i = 1, ..., n, n bezeichnet die Anzahl gebildeter abgeleiteter Schlüssel) 323, 324, grundsätzlich eine beliebige Anzahl zusätzlich abgeleiteter Schlüssel gemäß folgender Vorschrift gebildet und an den jeweiligen Applikationsserver-Computer übermittelt:

$$CKi = f_K(CK, CKi|Pari|random). \tag{11}$$

In diesem Fall kann Pari (i = 1, ..., n) die Identität, beispielsweise die IP-Adresse, des jeweiligen Applikationsserver-Computers 106, 107 darstellen.

Der jeweilige Parameter Pari kann ferner weitere Informationen über die Verwendung des Schlüssels enthalten, beispielsweise Informationen über die Verwendung zur Verschlüsselung oder zum Integritätsschutz, Informationen über die Richtung des Nachrichtenflusses (vom Mobilfunkendgerät 103 weg oder zum Mobilfunkendgerät 103 hin), für den der Schlüssel zum Einsatz kommen soll.

Nachdem der Integritätsschlüssel IK 314 und der Übertragungsschlüssel CK 312 in dem Mobilfunkendgerät 103 und in dem S-CSCF-Computer 109 verfügbar sind, wird die Schlüsselableitungsfunktion f 317 so oft ausgeführt, bis für alle zu sichernden Anwendungen die benötigten kryptographischen Schlüssel vorliegen. Dies erfolgt wie oben beschrieben sowohl im Mobilfunkendgerät 103 als auch in dem S-CSCF-Computer 109.

Anschließend werden die abgeleiteten Schlüssel beispielsweise von dem P-CSCF-Computer 113 (erster abgeleiteter Schlüssel CK1 318) zum Schutz der IMS-Nachrichten selbst und die weiteren abgeleiteten Schlüssel 322, 323, 324 einer jeweils zu sichernden Applikation zur Verfügung gestellt bzw. für diese passend eingesetzt.

Alternativ kann eine Schlüsselsequenz erzeugt werden durch Konkatenation der einzelnen erzeugten abgeleiteten Schlüssel CK1, CK2, CKi, CKn 318, 322, 323, 324. Dies ist von Vorteil, wenn die abgeleiteten Schlüssel in ihrer Länge nicht den Anforderungen des verwendeten Sicherungsverfahrens entsprechen oder wenn beispielsweise zwei unidirektionale Schlüssel für eine Applikation benötigt werden.

In diesem Fall ergibt sich ein abgeleiteter Schlüssel gemäß folgender Vorschrift:

$$KEYMAT = CK1|CK2|...|CKi|... \qquad (12)$$

Aus dieser Schlüsselsequenz KEYMAT werden dann, beginnend von links und aufeinander folgend die für die verschiedenen Applikationen benötigten kryptographischen Schlüssel entnommen.

Im Folgenden werden alternative Ausführungsbeispiele zur Bildung der abgeleiteten Schlüssel 318, 322, 323, 324 angegeben.

Das folgende Ausführungsbeispiel ähnelt dem in [3] und [4] beschriebenen Verfahren MILENAGE.

Es sei random geeignetes Zufallsmaterial, gebildet beispielsweise gemäß Vorschrift (8). Zur Bildung des Zufallswerts random wird das Verfahren gemäß dem oben beschriebenen Ausführungsbeispiel eingesetzt. Ferner wird angenommen, dass ASi-ID die Identität, beispielsweise die IP-Adresse, des Applikationsserver-Computers ASi für i = 1, 2, ..., n bezeichnet. Es sei h eine Hash-Funktion wie beispielsweise SHA-1. Mit E wird eine geeignete Blockchiffren-Verschlüsselungsfunktion mit Eingabewerten, Ausgabewerten und Schlüsseln jeweils von 128 Bitlänge bezeichnet. Wenn der Eingabewert x ist, der Schlüssel k ist und der Ausgabewert y ist, so wird der Ausgabewert y gemäß folgender Vorschrift ermittelt:

$$y = E[x]_k. \qquad (13)$$

Ein Beispiel für eine geeignete Blockchiffren-Verschlüsselungsfunktion ist das so genannte Rijndael-Verfahren, wie beispielsweise in [4] beschrieben.

Ein 128-Bit-Wert xi wird aus der Applikationsserver-Computer-Identität und dem Übertragungsschlüssel CK 312 gemäß folgender Vorschrift abgeleitet:

$$x_i = ASi\text{-}ID \oplus E[ASi\text{-}ID]_{CK}. \qquad (14)$$

Ein Zwischenwert TEMP der Länge 128 Bit wird gemäß folgender Vorschrift berechnet:

$$TEMP = E[random \oplus x_i]_{CK}. \qquad (15)$$

Ein jeweiliger abgeleiteter Schlüssel CKi wird nun wie folgt berechnet:

$$CKi(r,c) = E[rot(TEMP \oplus x_i, r) \oplus c]_{CK} \oplus x_i, \qquad (16)$$

wobei r und c geeignete vorgebbare Konstanten sind, wie beispielsweise in [4] beschrieben.

Wie ebenfalls in [4] beschrieben, ist es erfindungsgemäß möglich, durch geeignete Wahl weiterer Konstanten r und c weitere Schlüssel CKi(r,c) für denselben Applikationsserver-Computer abzuleiten.

Gemäß einem alternativen Ausführungsbeispiel der Erfindung, welches sich an das Schlüsselableitungsverfahren gemäß RSA PKCS#5 anlehnt, wird wiederum der Zufallswert random verwendet, der in gleicher Weise wie gemäß dem ersten Ausführungsbeispiel ermittelt wird.

Wiederum, wie gemäß dem zweiten Ausführungsbeispiel sei ASi-ID die Identität des Applikationsserver-Computers ASi für i = 1, 2, ..., n. Wiederum sei h eine Hash-Funktion wie beispielsweise SHA1 und mit PRF wird eine Pseudo-Zufallsfunktion bezeichnet.

Es werden folgende Werte berechnet:

$$x_0 = h(\text{"Chiffrierschlüssel für P-CSCF-Computer"}), \qquad (17)$$

$$x_i = h(ASi\text{-}ID). \qquad\qquad\qquad \text{für } i = 1, \ldots, n \qquad (18)$$

Anschließend werden die abgeleiteten Schlüssel CKi gemäß folgender Vorschrift für i = 0, 1, 2, ..., n berechnet:

$$CKi = F(CK, random, c, i) = U_1(i) \backslash XOR\ U_2(i) \backslash XOR\ \ldots\ \backslash XOR\ U_c(i)$$
$$(19)$$

Wobei mit c eine geeignete, geeignet vorgebbare ganze Zahl ist und

$$U_1(i) = PRF(CK, random|x_i) \qquad\qquad\qquad (20)$$

$$U_2(i) = PRF(CK, U_1(i)) \qquad\qquad\qquad (21)$$

$$\ldots$$

$$U_c(i) = PRF(CK, U_{c-1}(i)). \qquad\qquad\qquad (22)$$

Gemäß einer anderen alternativen Ausführungsform ist es vorgesehen, die Vorgehensweisen gemäß dem ersten Ausführungsbeispiel und dem zweiten Ausführungsbeispiel in folgendem Sinn miteinander zu kombinieren.
Es wird zunächst ein abgeleiteter Schlüssel CKi für den Applikationsserver-Computer ASi berechnet, wie in dem zweiten Ausführungsbeispiel beschrieben. Anschließend wird die Vorgehensweise gemäß dem ersten Ausführungsbeispiel angewendet, um weiteres Schlüsselmaterial für den Applikationsserver-Computer ASi zu erhalten, indem man den Übertragungsschlüssel CK 312 in dem ersten Ausführungsbeispiel ersetzt durch den jeweils abgeleiteten Schlüssel CKi, der aus dem Verfahren gemäß dem zweiten Ausführungsbeispiel erhalten wurde.
Dann ergeben sich für die zusätzlich abgeleiteten Schlüssel:

$$CKi1 = f(CKi, random) \qquad\qquad\qquad (23)$$

$$CKi2 = f(CKi, CKi1 \mid random) \qquad\qquad\qquad (24)$$

$$CKi3 = f(CKi, CKi2 \mid random) \qquad\qquad\qquad (25)$$

usw.
Nunmehr sind alle zur Verschlüsselung der jeweiligen Nachrichten im Rahmen der benötigten Applikationen sowohl in dem Mobilfunkendgerät 103, in dem P-CSCF-Computer 113 sowie in dem Applikationsserver-Computern 106, 107 vorhanden, ohne dass der P-CSCF-Computer 113 Rückschlüsse auf die abgeleiteten Schlüssel CKi 318, 322, 323, 324 in den Applikationsserver-Computern 106, 107 ziehen kann und umgekehrt, ohne dass die Applikationsserver-Computer 106, 107 Rückschlüsse auf das in dem P-CSCF-Computer 113 gespeicherte und verwendete Schlüsselmaterial ziehen können.

Unter Verwendung der abgeleiteten Schlüssel 318, 322, 323, 324 erfolgt im Folgenden die Verschlüsselung der zu übertragenden Nutzdaten.

In diesem Dokumenten sind folgende Veröffentlichungen zitiert:

[1] 3GPP TS 33.203 V5.3.0 - Technical Specification, 3rd Generation Partnership Project, Technical Specification Group Services and System Aspects, 3G Security, Access security for IP-based services (Release 5)

[2] G. Horn, D. Kröselberg, K. Müller: Security for IP multimedia services in the 3GPP third generation mobile system, Proceedings of the Third International Networking Conference INC'2002, Seiten 503 bis 512, Plymouth, UK, 16.-18. Juli 2002

[3] 3GPP TS 35.205 V5.0.0 - Technical Specification, 3rd Generation Partnership Project, Technical Specification Group Services and System Aspects, 3G Security, Specification of the MILENAGE Algorithm Set: An example algorithm set for the 3GPP authentication and key generation functions f1, f1*, f2, f3, f4, f5 and f5*, Document 1: General (Release 5)

[4] 3GPP TS 35.206 V5.0.0 - Technical Specification, 3rd Generation Partnership Project, Technical Specification Group Services and System Aspects, 3G Security, Specification of the MILENAGE Algorithm Set: An example algorithm set for the 3GPP authentication and key generation functions f1, f1*, f2, f3, f4, f5 and f5*, Document 2: Algorithm Specification (Release 5)

[5] IST-2000-25350 - SHAMAN, D13 - WP1 contribution, Final technical report comprising the complete technical results, specification and conclusion, Kapitel 4.7, Seiten 114 bis 122, November 2002

[6] D. Harkins und D. Carrel, The Internet Key Exchange (IKE), RFC 2409, Seiten 17 bis 19, November 1998

**Patentansprüche**

**1.** Verfahren zum Bilden und Verteilen kryptographischer Schlüssel (318, 322) in einem Mobilfunksystem (100), welches mindestens ein Mobilfunkendgerät (103), einen ersten Computer (113), einen Computer eines Heimat-Kommunikationsnetzes (109) sowie einen zweiten Computer (106, 107) aufweist, wobei das Mobilfunkendgerät (103) und der Computer des Heimat-Kommunikationsnetzes (109) als Ergebnis einer Authentifikation Authentifikations-Schlüsselmaterial (312, 314) enthalten, **dadurch gekennzeichnet, dass**

• von dem Mobilfunkendgerät (103) und dem Computer des Heimat-Kommunikationsnetzes (109) jeweils unter Verwendung des Authentifikations-Schlüsselmaterials (312) ein erster kryptographischer Schlüssel (318) und ein zweiter kryptographischer Schlüssel (322) gebildet werden,
• der erste kryptographische Schlüssel (318) dem ersten Computer (113) übermittelt wird, und
• der zweite kryptographische Schlüssel (322) dem zweiten Computer (106) übermittelt wird,
• der erste kryptographische Schlüssel (318) und der zweite kryptographische Schlüssel (322) derart gebildet werden, dass

• aus dem ersten kryptographischen Schlüssel (318) kein Rückschluss auf den zweiten kryptographischen Schlüssel (322) möglich ist,
• aus dem zweiten kryptographischen Schlüssel (322) kein Rückschluss auf den ersten kryptographischen Schlüssel (318) möglich ist,
• aus dem ersten kryptographischen Schlüssel (318) oder dem zweiten kryptographischen Schlüssel (322) kein Rückschluss auf das Authentifikations-Schlüsselmaterial (312, 314) möglich ist

• der erste bzw. zweite kryptografische Schlüssel im Rahmen der Kommunikation zwischen dem Mobilfunkendgerät und dem ersten bzw. zweiten Computer verwendet wird.

**2.** Verfahren gemäß Anspruch 1,

• bei dem der erste Computer (113) ein Computer eines besuchten Kommunikationsnetzes ist, wobei sich das Mobilfunkendgerät (103) in dem besuchten Kommunikationsnetz (102) befindet, und

• bei dem der zweite Computer ein Applikationsserver-Computer (106, 107) ist.

3. Verfahren gemäß Anspruch 1,

• bei dem der erste Computer (113) ein erster Applikationsserver-Computer (106) ist und
• bei dem der zweite Computer ein zweiter Applikationsserver-Computer (107) ist.

4. Verfahren gemäß einem der Ansprüche 1 bis 3,
bei dem der erste kryptographische Schlüssel (318) und der zweite kryptographische Schlüssel (322) unter Verwendung mindestens einer Schlüsselableitungsfunktion (317) gebildet werden.

5. Verfahren gemäß einem der Ansprüche 1 bis 4,
bei dem das Authentifikations-Schlüsselmaterial (312, 314) mindestens zwei kryptographische Schlüssel aufweist.

6. Verfahren gemäß einem der Ansprüche 1 bis 5,
bei dem das Mobilfunksystem (100) als ein auf einem 3GPP-Standard basierendes Mobilfunksystem ausgestaltet ist.

7. Verfahren gemäß Anspruch 6,
bei dem das Mobilfunksystem (100) ein IP-Multimedia-Subsystem aufweist.

8. Verfahren gemäß einem der Ansprüche 1 bis 7,
bei dem das Authentifikations-Schlüsselmaterial (312, 314) einen Integritätsschlüssel (314) und einen Übertragungsschlüssel (312) aufweist.

9. Verfahren gemäß Anspruch 8,
bei dem der erste kryptographische Schlüssel (318) und der zweite kryptographische Schlüssel (322) aus dem Übertragungsschlüssel (312) abgeleitet werden.

10. Verfahren gemäß einem der Ansprüche 1 bis 9,
bei dem von dem Mobilfunkendgerät (103) und dem Computer des Heimat-Kommunikationsnetzes (109) für zusätzliche Applikationsserver-Computer (107) jeweils unter Verwendung des Authentifikations-Schlüsselmaterials (312, 314) zusätzliche kryptographische Schlüssel (323, 324) gebildet werden und den jeweiligen Applikationsserver-Computern (107) übermittelt werden.

11. Verfahren gemäß einem der Ansprüche 1 bis 10,
bei dem zur Bildung der kryptographischen Schlüssel (318, 322, 323, 324) dieselbe Schlüsselableitungsfunktion verwendet wird.

12. Verfahren gemäß einem der Ansprüche 1 bis 11,
bei dem zur Bildung der kryptographischen Schlüssel (318, 322, 323, 324) unterschiedliche zusätzliche Eingangsparameter (319) für die Schlüsselableitungsfunktion (317) verwendet werden.

13. Verfahren gemäß Anspruch 12,
bei dem als zusätzliche Eingangsparameter (319) für die Schlüsselableitungsfunktion (317) Parameter verwendet werden, die im Rahmen der Authentifikation gebildet wurden.

14. Verfahren gemäß Anspruch 13,
bei dem als zusätzliche Eingangsparameter für die Schlüsselableitungsfunktion mindestens einer der zuvor gebildeten kryptographischen Schlüssel (318, 322, 323, 324) verwendet wird.

15. Mobilfunksystem (100)

• mit mindestens einem Mobilfunkendgerät (103), in dem als Ergebnis einer Authentifikation Authentifikations-Schlüsselmaterial (312, 314) gespeichert ist,
• mit einem ersten Computer (113),
• mit einem Computer eines Heimat-Kommunikationsnetzes (109) in dem als Ergebnis einer Authentifikation das Authentifikations-Schlüsselmaterial (312, 314) gespeichert ist,
• mit mindestens einem zweiten Computer (106, 107), **gekennzeichnet dadurch, dass**

das Mobilfunkendgerät (103) und der Computer des Heimat-Kommunikationsnetzes (109) jeweils eine Kryptoeinheit aufweisen zur Bildung eines ersten kryptographischen Schlüssels (318) und eines zweiten kryptographischen Schlüssels (322) unter Verwendung des Authentifikations-Schlüsselmaterials (312, 314), wobei der erste kryptographische Schlüssel (318) und der zweite kryptographische Schlüssel (322) derart gebildet werden, dass

- aus dem ersten kryptographischen Schlüssel (318) kein Rückschluss auf den zweiten kryptographischen Schlüssel (322) möglich ist,
- aus dem zweiten kryptographischen Schlüssel (322) kein Rückschluss auf den ersten kryptographischen Schlüssel (318) möglich ist,
- aus dem ersten kryptographischen Schlüssel (318) oder dem zweiten kryptographischen Schlüssel (322) kein Rückschluss auf das Authentifikations-Schlüsselmaterial (312, 314) möglich ist,

• der erste Computer (113) einen Speicher aufweist zur Speicherung des ersten kryptographischen Schlüssels (318), und
• der zweite Computer (106, 107) einen Speicher aufweist zur Speicherung des zweiten kryptographischen Schlüssels (322)
• der erste bzw. zweite kryptografische Schlüssel im Rahmen der Kommunikation zwischen dem Mobilfunkendgerät und dem ersten bzw. zweiten Computer verwendet wird.

**Claims**

1. Method for creating and distributing cryptographic keys (318, 322) in a mobile radio system (100), said system having at least one mobile radio terminal (103), a first computer (113), a computer of a home communications network (109) and a second computer (106, 107), with the mobile radio terminal (103) and the computer of the home communications network (109) containing authentication key material (312, 314) resulting from an authentication, **characterised in that**
a first cryptographic key (318) and a second cryptographic key (322) are created by the mobile radio terminal (103) and by the computer of the home communications network (109) in each case using the authentication key material (312),
the first cryptographic key (318) is transmitted to the first computer (113), and
the second cryptographic key (322) is transmitted to the second computer (106),
the first cryptographic key (318) and the second cryptographic key (322) are created in such a way that

• it is not possible to deduce the second cryptographic key (322) from the first cryptographic key (318),
• it is not possible to deduce the first cryptographic key (318) from the second cryptographic key (322),
• it is not possible to deduce the authentication key material (312, 314) from the first cryptographic key (318) or from the second cryptographic key (322),

the first or second cryptographic key is used in the course of the communication between the mobile radio terminal and the first or second computer respectively.

2. Method according to claim 1,

• wherein the first computer (113) is a computer of a visited communications network, with the mobile radio terminal (103) being situated in the visited communications network (102), and
• with the second computer being an application server computer (106, 107).

3. Method according to claim 1,

• wherein the first computer (113) is a first application server computer (106) and
• wherein the second computer is a second application server computer (107).

4. Method according to one of claims 1 to 3,
wherein the first cryptographic key (318) and the second cryptographic key (322) are created using at least one key derivation function (317).

**5.** Method according to one of claims 1 to 4,
wherein the authentication key material (312, 314) has at least two cryptographic keys.

**6.** Method according to one of claims 1 to 5,
wherein the mobile radio system (100) is embodied as a mobile radio system based on a 3GPP standard.

**7.** Method according to claim 6,
wherein the mobile radio system (100) has an IP multimedia subsystem.

**8.** Method according to one of claims 1 to 7,
wherein the authentication key material (312, 314) has an integrity key (314) and a transfer key (312).

**9.** Method according to claim 8,
wherein the first cryptographic key (318) and the second cryptographic key (322) are derived from the transfer key (312).

**10.** Method according to one of claims 1 to 9,
wherein additional cryptographic keys (323, 324) are created by the mobile radio terminal (103) and by the computer of the home communications network (109) for additional application server computers (107) in each case using the authentication key material (312, 314) and are transmitted to the respective application server computers (107).

**11.** Method according to one of claims 1 to 10,
wherein the same key derivation function is used for creating the cryptographic keys (318, 322, 323, 324).

**12.** Method according to one of claims 1 to 11,
wherein different additional input parameters (319) are used for the key derivation function (317) for the purpose of creating the cryptographic keys (318, 322, 323, 324).

**13.** Method according to claim 12,
wherein parameters created in the course of the authentication are used as additional input parameters (319) for the key derivation function (317).

**14.** Method according to claim 13,
wherein at least one of the previously created cryptographic keys (318, 322, 323, 324) is used as additional input parameters for the key derivation function.

**15.** Mobile radio system (100),

• having at least one mobile radio terminal (103) in which authentication key material (312, 314) resulting from an authentication is stored,
• having a first computer (113),
• having a computer of a home communications network (109), in which computer the authentication key material (312, 314) resulting from an authentication is stored,
• having at least one second computer (106, 107),
**characterised in that**
the mobile radio terminal (103) and the computer of the home communications network (109) each have a crypto unit for creating a first cryptographic key (318) and a second cryptographic key (322) using the authentication key material (312, 314), with the first cryptographic key (318) and the second cryptographic key (322) being created in such a way that

- it is not possible to deduce the second cryptographic key (322) from the first cryptographic key (318),
- it is not possible to deduce the first cryptographic key (318) from the second cryptographic key (322),
- it is not possible to deduce the authentication key material (312, 314) from the first cryptographic key (318) or from the second cryptographic key (322),

• the first computer (113) has a memory for storing the first cryptographic key (318), and
• the second computer (106, 107) has a memory for storing the second cryptographic key (322),
• the first or second cryptographic key is used in the course of the communication between the mobile radio terminal and the first or second computer respectively.

**Revendications**

**1.** Procédé de création et de répartition de clés cryptographiques (318, 322) dans un système radio mobile (100) qui comporte au moins un terminal radio mobile (103), un premier ordinateur (113), un ordinateur d'un réseau de communication nominal (109) ainsi qu'un deuxième ordinateur (106, 107), le terminal radio mobile (103) et l'ordinateur du réseau de communication nominal (109) contenant du matériel de clé d'authentification (312, 314) en tant que résultat d'une authentification, **caractérisé en ce que**

- une première clé cryptographique (318) et une deuxième clé cryptographique (322) sont créées par le terminal radio mobile (103) et l'ordinateur du réseau de communication nominal (109) respectivement avec utilisation du matériel de clé d'authentification (312),
- la première clé cryptographique (318) est transmise au premier ordinateur (113) et
- la deuxième clé cryptographique (322) est transmise au deuxième ordinateur (106),
- la première clé cryptographique (318) et la deuxième clé cryptographique (322) sont créées de manière telle que
- - la première clé cryptographique (318) ne permet pas de déduction quant à la deuxième clé cryptographique (322),
- - la deuxième clé cryptographique (322) ne permet pas de déduction quant à la première clé cryptographique (318),
- - la première clé cryptographique (318) ou la deuxième clé cryptographique (322) ne permettent pas de déduction quant au matériel de clé d'authentification (312, 314),
- la première respectivement la deuxième clé cryptographique sont utilisées dans le cadre de la communication entre le terminal radio mobile et le premier respectivement le deuxième ordinateur.

**2.** Procédé selon la revendication 1,

- dans lequel le premier ordinateur (113) est un ordinateur d'un réseau de communication visité, le terminal radio mobile (103) se trouvant dans le réseau de communication visité (102), et
- dans lequel le deuxième ordinateur est un ordinateur de serveur d'application (106, 107).

**3.** Procédé selon la revendication 1,

- dans lequel le premier ordinateur (113) est un premier ordinateur de serveur d'application (106) et
- dans lequel le deuxième ordinateur est un deuxième ordinateur de serveur d'application (107).

**4.** Procédé selon l'une des revendications 1 à 3, dans lequel la première clé cryptographique (318) et la deuxième clé cryptographique (322) sont créées avec utilisation d'au moins une fonction de dérivation de clé (317).

**5.** Procédé selon l'une des revendications 1 à 4, dans lequel le matériel de clé d'authentification (312, 314) comporte au moins deux clés cryptographiques.

**6.** Procédé selon l'une des revendications 1 à 5, dans lequel le système radio mobile (100) se présente sous la forme d'un système radio mobile basé sur un standard 3GPP.

**7.** Procédé selon la revendication 6, dans lequel le système radio mobile (100) comporte un sous-système multimédia IP.

**8.** Procédé selon l'une des revendications 1 à 7, dans lequel le matériel de clé d'authentification (312, 314) comporte une clé d'intégrité (314) et une clé de transmission (312).

**9.** Procédé selon la revendication 8, dans lequel la première clé cryptographique (318) et la deuxième clé cryptographique (322) sont dérivées de la clé de transmission (312).

**10.** Procédé selon l'une des revendications 1 à 9, dans lequel des clés cryptographiques supplémentaires (323, 324) sont créées par le terminal radio mobile (103) et l'ordinateur du réseau de communication nominal (109) pour des ordinateurs de serveur d'application (107) supplémentaires, à chaque fois avec utilisation du matériel de clé d'authentification (312, 314), et transmises aux ordinateurs de serveur d'application respectifs (107).

11. Procédé selon l'une des revendications 1 à 10, dans lequel la même fonction de dérivation de clé est utilisée pour créer les clés cryptographiques (318, 322, 323, 324).

12. Procédé selon l'une des revendications 1 à 11, dans lequel des paramètres d'entrée supplémentaires différents (319) pour la fonction de dérivation de clé (317) sont utilisés pour créer les clés cryptographiques (318, 322, 323, 324).

13. Procédé selon la revendication 12, dans lequel sont utilisés, en tant que paramètres d'entrée supplémentaires (319) pour la fonction de dérivation de clé (317), des paramètres qui ont été créés dans le cadre de l'authentification.

14. Procédé selon la revendication 13, dans lequel est utilisée, en tant que paramètres d'entrée supplémentaires pour la fonction de dérivation de clé, au moins l'une des clés cryptographiques préalablement créées (318, 322, 323, 324).

15. Système radio mobile (100)

- avec au moins un terminal radio mobile (103) dans lequel du matériel de clé d'authentification (312, 314) est stocké en tant que résultat d'une authentification,
- avec un premier ordinateur (113),
- avec un ordinateur d'un réseau de communication nominal (109) dans lequel le matériel de clé d'authentification (312, 314) est stocké en tant que résultat d'une authentification,
- avec au moins un deuxième ordinateur (106, 107),
**caractérisé en ce que**
- le terminal radio mobile (103) et l'ordinateur du réseau de communication nominal (109) comportent chacun une unité cryptographique pour créer une première clé cryptographique (318) et une deuxième clé cryptographique (322) en utilisant le matériel de clé d'authentification (312, 314), la première clé cryptographique (318) et la deuxième clé cryptographique (322) étant créées de manière telle que
- - la première clé cryptographique (318) ne permet pas de déduction quant à la deuxième clé cryptographique (322),
- - la deuxième clé cryptographique (322) ne permet pas de déduction quant à la première clé cryptographique (318),
- - la première clé cryptographique (318) ou la deuxième clé cryptographique (322) ne permettent pas de déduction quant au matériel de clé d'authentification (312, 314),
- le premier ordinateur (113) comporte une mémoire pour stocker la première clé cryptographique (318) et
- le deuxième ordinateur (106, 107) comporte une mémoire pour stocker la deuxième clé cryptographique (322),
- la première respectivement la deuxième clé cryptographique sont utilisées dans le cadre de la communication entre le terminal radio mobile et le premier respectivement le deuxième ordinateur.

# FIG 1

# FIG 2

200

| 103 | 113 | 112 | 108 | 109 |

201

201

201

202

203

204

204

205

206

206

206

207

207

208

| 106 |

209

## FIG 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1156694 A1

### In der Beschreibung aufgeführte Nicht-Patentliteratur

- **G. HORN ; D. KRÖSELBERG ; K. MÜLLER.** Security for IP multimedia services in the 3GPP third generation mobile system. *Proceedings of the Third International Networking Conference INC'2002,* 16. Juli 2002, 503-512

- **D. HARKINS ; D. CARREL.** *The Internet Key Exchange (IKE), RFC 2409,* November 1998, 17-19